# EUROPEAN PATENT APPLICATION

(11) **EP 1 727 067 A2**
(43) Date of publication of application: **29.11.2006**
(21) Application number: 05014699.2
(22) Date of filing: 06.07.2005
(51) Int. Cl.: G06F 21/00

(54) **Method for detecting viruses in macros of a data stream**

(30) Priority: 10.05.2005 US 908403
(71) Applicant: DrayTek Corp., Hsin-Chu Industrial Park, Hsin-Chu, Hsien (TW)
(72) Inventor: Yang, Tzu-Jian, Hsinchuang City Taipei Hsien (TW)
(74) Representative: Weber, Joachim

(57) **Abstract**

A method for detecting viruses in macros of a data stream includes a data collecting process, a macro process, and a scanning process. The method provides improved benefits in efficiency and space requirements under real time environments by only scanning the macros of the collected data for viruses and suspicious instructions.

## Description

The present invention relates to a method for detecting viruses in macros of a data stream according to the pre-characterizing clause of claim 1.

Current methods for detecting a virus in macros are all based on the organization of files. The file module for macro analysis extracts macros from the file, stores and decodes them in.first temporary files, stores the decoded macros in second temporary files, and compares the decoded macros with known virus sets. A mechanism like this is affordable in execution of traditional personal computers since the mechanism does not confront too many limitations in memory and storage. However, if the mechanism is running on routers of the network, routers cannot scan the file for viruses until the file is collected completely. Moreover, space for storage must also be prepared for the temporary files. Therefore the method is not convenient for routers, which are limited by space for storage and have no file systems to apply the mechanism. Besides the problem of utilizing space for temporary files, the insufficient advance knowledge of the ending time of file collection is always a crucial cause for missing the preemptive opportunity of detecting virus.

This in mind, the present invention aims at providing a method for detecting viruses in a data stream without the need for a complete file to be received.

This is achieved by a method for detecting a virus in a macros of a data stream according to claim 1. The dependent claims pertain to corresponding further developments and improvements.

As will be seen more clearly from the detailed description following below, the claimed method detects viruses hidden in macros without waiting for the complete collection of the file. The method also brings improvements to inefficiencies caused by the requirement for a file system and the insufficient ability for knowing the ending time of collecting a file. The claimed method extracts the macros and scans the macros for viruses and suspicious instructions in all divided parts of the collected data rather than waiting for the complete collection of the file before scanning as in the prior art.

In the following, the invention is further illustrated by way of example, taking reference to the accompanying drawings. Thereof
Fig.1 is the first part of a flowchart illustrating a method for detecting viruses in macros of a data stream;
Fig.2 is the second part of the flowchart of Fig.1; and
Fig.3 is a functional block diagram of a computer system according to the present invention.

The methods of prior art for detecting a virus in macros of a file are based on the organization of the file. Limited by the format of the file, traditional methods for detecting a virus in the file always require complete collection of the file. After the collection of the file, a file-analysis module will extract macros from the file and store them in temporary files. Further macro analysis and comparisons will be executed on the temporary files. One such prior art method is proposed in US patent 5,951,698, incorporated herein in its entirety by reference.

If the method of prior art is implemented on routers of the network, it may be ineffective since the virus detection of a file must be executed after the complete collection of the file. Moreover, if the extracted macros are not stored in the temporary files, some kind of temporary space for storing the macros is still required. In some application programs, such as File Transfer Protocol (FTP) and Instant Message (IM) File Exchange programs, a defect of the method will appear since sizes of the detected files are not immediately available while receiving the detected files. In other words, the moment the end of the file will be received is not well known, and the preemptive opportunity of detecting a virus will be missed.

Current methods for detecting a virus in macros are all based on the organization of files. The file module for macro analysis extracts macros from the file, stores and decodes them in first temporary files, stores the decoded macros in second temporary files, and compares the decoded macros with known virus sets. A mechanism like this is affordable in execution of traditional personal computers since the mechanism does not confront too many limitations in memory and storage. However, if the mechanism is running on routers of the network, routers cannot scan the file for viruses until the file is collected completely. Moreover, space for storage must also be prepared for the temporary files. Therefore the method is not convenient for routers, which are limited by space for storage and have no file systems to apply the mechanism. Besides the problem of utilizing space for temporary files, the insufficient advance knowledge of the ending time of file collection is always a crucial cause for missing the preemptive opportunity of detecting virus.

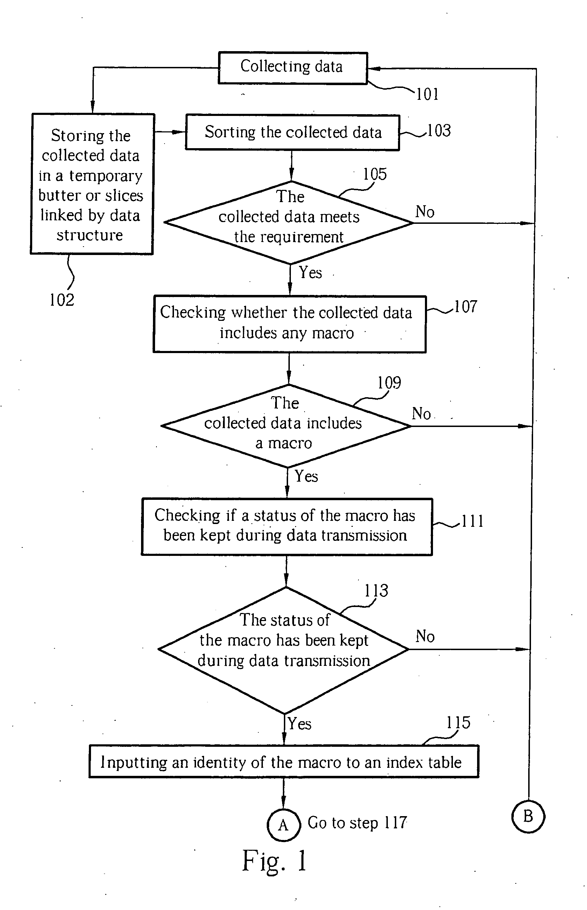

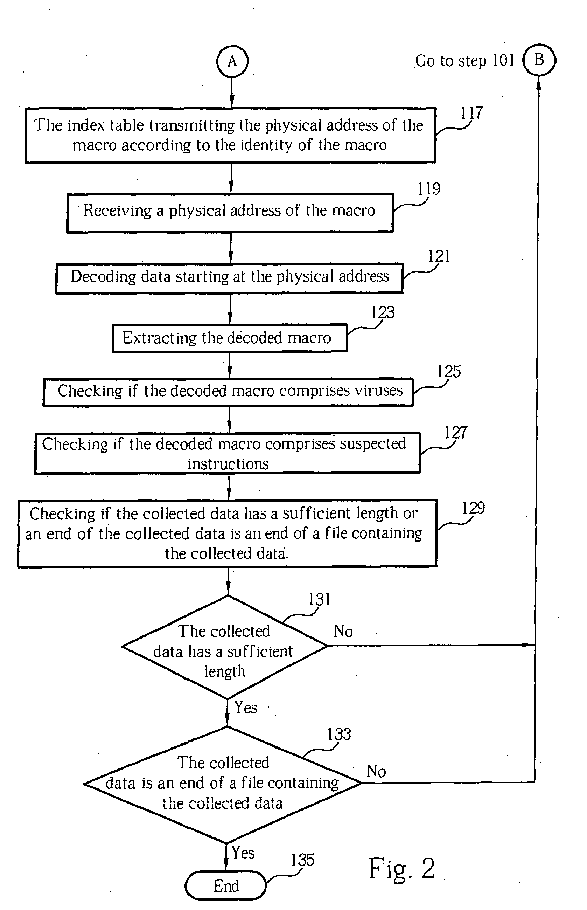

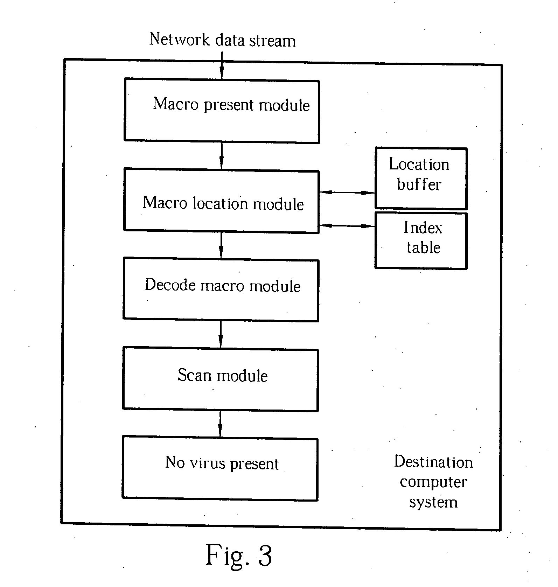

Please refer to Fig.1, Fig.2, and Fig.3, which respectively are a flowchart illustrating a method for detecting viruses in macros of a data stream and a functional block diagram of a computer system that applies the claimed method. The method comprises the following steps but is not restricted to the following sequence.
Step 101: Collecting data;
Step 102: Storing the collected data in a temporary buffer or slices linked by data structure
Step 103: Sorting the collected data;
Step 105: Checking whether the collected data meets the requirement;
Step 107: Checking whether the collected data includes any macro;
Step 109: The collected data includes a macro;
Step 111: Checking if a status of the macro has been kept during data transmission;
Step 113: The status of the macro has been kept during data transmission;
Step 115: Inputting an identity of the macro to an index table;
Step 117: The index table transmitting the physical address of the macro according to the identity of the macro;
Step 119: Receiving a physical address of the macro;
Step 121: Decoding data starting at the physical address;
Step 123: Extracting the decoded macro from the decoded data;
Step 125: Checking if the decoded macro comprises a virus;
Step 127: Checking if the decoded macro comprises suspicious instructions;
Step 129: Checking if the collected data has a sufficient length or the collected data includes an end of a file in the collected data;
Step 131: The collected data has a sufficient length;
Step 133: The collected data includes an end of a file in the collected data; and
Step 135: End.

In Step 101, the target device of the data stream transmission collects data from data streams in the network. The following steps are all performed inside the target device of the data stream transmission.

In Step 102, the collected data is stored in a temporary buffer, and the slices containing information such as physical addresses or identities about the collected data are also stored for later processes. Particularly, the slices about the collected data are linked to the collected data by data structure such as priority queue or other data structures.

In Step 103, during the data stream transmission in the network, data of the data stream are divided and transmitted in the form of packets. However, there are problems caused by protocols applied on routers and uncertainties of the network of inconsistencies of the order of reception of the packets transmitted between the source computer and the destination computer and problems of lost packets. Therefore, there is a data input unit in the target device of the data stream transmission to handle the above problems associated with the network, sort the data collected in the target device of the data stream transmission, dispatch the collected data by order to the next unit, and ensure that the amount of data collection meets the requirement of macro processing.

In Step 107, if the collected data meets the requirement of macro processing, then a macro present module in the target device of the data stream transmission will check whether the collected data includes any macro for further processing.

In Step 11i, if the collected data includes a macro, checking if the status, which may be any macro status bit stored in the header of the packet or other temporary buffers, of the macro has been kept during data transmission belonging to the data stream transmission.

In Step 115, since the status of the macro has been kept during the data stream transmission, the process for extracting and decoding the macro from the collected data is able to begin. Because of the format of the collected data, the identity of the macro is not stored together with the essence of the macro in the collected data so that the essence of the macro cannot be accessed directly. A macro location module in the target device of the data stream transmission is responsible for searching the physical address of the macro in the collected data to solve the above problem. The macro location module retrieves the identity of the macro from the macro present module and stores the identity of the macro from the macro location module into a location buffer, which will be discussed in Step 129, so that the macro location module can query an index table, which stores the physical address in the collected data of the macro, to retrieve the physical address of the essence of the macro in the collected data. For querying the index table, the macro location module must input the identity of the macro as an index into the index table.

In Step 117, the index table transmits the physical address of the macro in the collected data back to the macro location module according to the identity of the macro and the request of the macro location module.

In Step 119, after receiving the physical address of the macro in the collected data, the macro location module is responsible for provide the physical address of the macro in the collected data for the succeeding modules of the target device of the data stream transmission to operate.

In Step 121, a decode macro module retrieves the macro directly from the collected data according to the physical address, which is retrieved from the macro location module, of the macro in the collected data since the macro starts at the indicated physical address in the collected data. Then the decode macro module decodes the macro into a form of plain text. The present embodiment of the claimed invention provides a method for decoding macros under a real time environment by dividing the macro into consecutive parts and retrieving one divided part of a macro and decoding another divided part of the macro simultaneously. The present embodiment could save much more temporary storage space by retrieving and decoding the macro simultaneously, for example, utilizing a few registers whose total size is much less than one single macro, than other embodiments of retrieving and decoding the macro in different and non-overlapping periods, because retrieving and decoding the macro in different and non-overlapping periods would take at least the space of the size of one single macro and at least double the space taken in the present embodiment.

In Step 125 and Step 127, a scan module is responsible for checking the divided and decoded macro for viruses and suspicious instructions. Primary purposes of the scan module are maintaining the continuity between consecutive but divided parts of the decoded macro and comparing signatures between the decoded macro and both the sample viruses and the suspicious instructions. The scan module performs the comparisons by the way of string by string so that the continuity between consecutive but divided parts of the decoded macro is maintained since the pattern of the strings in the macro is not disarranged even the macro is divided. The signatures of sample viruses and the suspicious instructions are stored in a database of the scan module to check whether there is any similar signature in the scanned macro. When scanning the divided and decoded macro, the stored signatures of the sample viruses and suspicious instructions in the database of the scan module are compared with the divided and decoded macro. If one stored signature of the sample viruses or suspicious instructions and one signature of the decoded and divided macro match each other, then the matched signature, which is consistent with the stored sample viruses or suspicious instructions, of the decoded and divided macro will be reported.

In Step 129, Step 131, and Step 133, for the sake of unfailing receiving of data from the network, the data input unit of the target device of the data stream transmission continues handling other collected data in the data stream if the data stream is still continuously transmitted from the network. The location buffer belonging to the macro location module of the target device of the data stream transmission, is responsible for storing the identities of the macros received from the macro present module and used by the macro location module in Step 115, checking if the amount of the received identities of the macros exceeds the capability of the location buffer, and changing the capability of the location buffer dynamically according to the amount of the received identities of the macros at any time. The mechanism of dynamically changing the location buffer capacity helps the present embodiment be applied under real time environments since the mechanism spares much space and facilitates the macro location module by inputting the identities of the macros into the location buffer and outputting the identities of the macros from the location buffer simultaneously. If the amount of the inputted identities of macros exceeds the capability of the location buffer, the location buffer will increase its capability right away by requesting the target device of the data stream transmission for more space. And if the amount of the inputted identities of macros is far from exceeding the capability of the location buffer, the location buffer will decrease its capability appropriately by returning some space of the location buffer back to the target device of the data stream transmission. When all the macros belonging to a single packet in the collected data are scanned and a corresponding amount of identities of the scanned macros are outputted from the location buffer, a sufficient length of the collected data has been scanned is represented and then all the macros belonging to the packet in the collected data will be checked to determine whether there is an end-of-file signature in the packet. An end-of-file signature found in the packet represents that the end of the file containing the collected data has been met. Then the process corresponding to the file containing the collected data ends, and another process corresponding to an unprocessed received file will begin by the way of going to Step 101 while there still may be other files simultaneously progressing through various stages of the above steps in the target device of the data stream transmission.

The claimed invention provides a method for detecting viruses hidden in macros without waiting for the complete collection of the file. The method also brings improvements to inefficiencies caused by the requirement for a file system and the insufficient ability for knowing the ending time of collecting a file. The present embodiment of the claimed invention extracts the macros and scans the macros for viruses and suspicious instructions in all divided parts of the collected data rather than waiting for the complete collection of the file before scanning as in the prior art. Moreover, when the end-of-file signature is detected, the ending time of collecting data belonging to a single file is perceived immediately. Immediately perceiving the ending time of collecting data is especially effective against application programs of variable sizes, such as File Transfer Protocol (FTP) and Instant Message (IM) File Exchange programs, since only the end-of-file signature must be found rather than the size of the application program. This contrasts sharply with the prior art where the whole application program, whose size is unknown and necessary to be found before further scanning, is stored in temporary files waiting the further scanning. Therefore the present embodiment of the claimed invention is more efficient than the scanning method of files in the prior art. Regarding the space for storage, the present embodiment of the claimed invention takes much less space than the prior art method of storing the whole file into a temporary file since only one divided part of the file comprising the collected data needs to be stored at one time.

## Claims

1. A method for detecting a virus in a macros of a data stream, the method comprising following steps:
(a) collecting data;
(b) sorting the collected data; and
**characterized in that**:
(c) when the collected data meets a predetermined requirement, checking whether the collected data includes any macro;
(d) when the collected data includes a macro, checking if a status of the macro has been kept during data transmission;
(e) when the status of the macro has been kept during data transmission, receiving a physical address of the macro;
(f) decoding data starting at the physical address;
(g) extracting a decoded macro from the decoded data; and
(h) checking if the decoded macro comprises a virus.

2. The method of claim 1 **characterized in that** the method further comprises step (i): checking if the collected data meets the predetermined requirement.

3. The method of claim 2 **characterized by** step (i) comprises checking if the collected data has a sufficient length or an end of the collected data is an end of a file containing the collected data.

4. The method of claim 1 **characterized in that** the method further comprises checking if the decoded macro contains suspicious instructions.

5. The method of claim 1 **characterized in that** the method further comprises inputting an identity of the macro to an index table when the status of the macro has been kept during data transmission.

6. The method of claim 5 **characterized in that** the method further comprises the index table transmitting the physical address of the macro according to the identity of the macro.

7. The method of claim 5 **characterized in that** the method further comprises dynamically changing a size of a location buffer, which stores the identity of the macro according to number of macros within the collected data.

8. The method of claim 1 **characterized in that** the method further comprises storing the collected data in a temporary buffer, or slices which are linked by data structure.
